Europäisches Patentamt

European Patent Office

Office européen des brevets

(11) Publication number: **0 480 140 A2**

# EUROPEAN PATENT APPLICATION

(21) Application number: **91113193.6**

(22) Date of filing: **06.08.91**

(51) Int. Cl.5: **B29C 51/08**, B29D 24/00, B29C 67/14

(30) Priority: **20.08.90 US 569846**

(43) Date of publication of application:
**15.04.92 Bulletin 92/16**

(84) Designated Contracting States:
**AT BE CH DE DK ES FR GB GR IT LI LU NL SE**

(71) Applicant: **Irbit Research + Consulting AG
8, Rue St Pierre
CH-1701 Fribourg(CH)**

(72) Inventor: **The inventors have agreed to waive
their entitlement to designation**

(74) Representative: **Müller, Enno et al
Rieder & Partner Corneliusstrasse 45
W-5600 Wuppertal 11(DE)**

(54) Method and apparatus for manufacturing dimpled structures from elastic cloth.

(57) A high strength dimpled sheet structure and a method and apparatus of making that structure. A pair of opposed dies having a plurality of upstanding, spaced fingers are provided with the pins of one die spaced between the pins of the opposite die. A sheet of resin precursor impregnated knit fiber material is placed between the dies which are brought together to form a pattern of alternately opposite dimples in the sheet. The resin is cured to at least a shape retaining state and the dimpled sheet is removed from the die assembly. The resin can be either fully cured in the die assembly or after removal from the die assembly. A variety of dimple patterns may be produced by tilting the dies before bringing them together and by varying the height of the fingers in selected areas. Face sheets may be bonded to the dimpled sheet to produce a flat structural panel. The dimpled sheet may be coated with a foam layer, or the spaces between the dimpled sheet and face sheets may be filled with foam. The dimpled sheet in any of these configurations has high strength and is easily manufactured in inexpensive tooling.

FIGURE 2

EP 0 480 140 A2

## BACKGROUND OF THE INVENTION

This invention relates in general to composite structures and, more particularly, to structures including dimpled structures made from highly elastic cloth.

High strength, low weight structures and panels formed from high strength fibers embedded in a plastic resin matrix are coming into use in place of metal structures in many applications. Typically, glass, aramid, graphite or other fibers are impregnated with a thermosetting or thermoplastic matrix material which is assembled on suitable shaping surfaces and cured or heated and reshaped to give a desired structure. While very useful in a variety of applications such as boat hulls to aircraft wing skins, these materials often do not have sufficient stiffness for some panel applications unless made very thick and heavy. In some cases, greater strength in one direction can be obtained by corrugating the fiber reinforced panel, such as is described by Shorts in U.S. Patent 2,784,763 or pressing the material in a die to form ribs, as described by Buntin et al. in U.S. Patent 3,947,537. These panels tend to be stiff in one direction but very flexible in the perpendicular direction.

Panels using honeycomb core sheets between face sheets have long been used in applications requiring omnidirectional stiffness and very light weight. A honeycomb core is prepared, generally from metal such as aluminum and bonded to two face sheets. While effective, these panels are complex and expensive to manufacture and often do not have required impact resistance. Reshaping honeycomb core panels is difficult. For example, honeycomb core panels generally form a "saddle" shape when bent into curved shapes, requiring careful and complex preshaping as described by Steele in U.S. Patent 2,668,327 in order to produce the desired curved product, such as a tube. Producing honeycomb core panels having varying thickness, tapered areas, or other variations from a uniformly flat panel is very difficult and requires unique, expensive tooling.

In some cases panels have been produced by forming corrugated core sheets from fiber reinforced plastics, then adhesively bonding flat face sheets to the core sheets as described, for example, by Brookhart in U.S. Patent 3,989,789 and Green et al. in U.S. Patent 4,329,194. While the resulting structural panel has greater strength than the corrugated core alone, that strength tends to be primarily in the direction of the corrugations and to be much lower across the corrugations. Since corrugated core sheets are ordinarily produced by passing flat composite sheets between corrugated rollers, the production of core having areas of different thickness, tapered regions and the like is very difficult.

Thus, there is a continuing need for methods and apparatus for producing high strength, high stiffness, light weight structural panels and the like. In particular there is a need for low cost methods of producing fiber reinforced panels having a lightweight core between face sheets in which thickness of the panel can be easily modified in selected regions.

## SUMMARY OF THE INVENTION

A method and apparatus for manufacturing dimpled structural shapes from sheets of knit high-strength fiber cloth impregnated with a thermoplastic or a thermosetting resin precursor. The impregnated cloth is placed between a pair of opposed dies each having a plurality of opposed, spaced, upstanding fingers. The fingers on the dies are not aligned with each other, ordinarily spaced in a uniformly interlaced or "checkerboard" relationship. When the dies are brought together, the fingers stretch the cloth to form a double dimple pattern of alternately arranged dimples in opposite directions. The impregnating resin is cured to at least a shape retaining state, after which the dimpled sheet can be removed for further processing.

This sheet is very adaptable, and can be easily modified or combined with other materials for many uses. Typically, face sheets may be bonded to one or both faces, foam may be added for thermal and acoustic insulation and increased rigidity, varied dimple patterns may be used and the sheet may be reshaped in one direction; that is, rolled into tubular or conical shapes, bent along straight lines, etc.

It is, therefore a purpose of this invention to provide a method and apparatus for producing a high strength, light weight composite structure having omnidirectional strength characteristics in the plane of the panel and which can be easily modified in selected areas to have regions of greater or lesser thickness, tapered areas or panels, etc.

## BRIEF DESCRIPTION OF THE DRAWING

Details of the invention, and of several preferred embodiments thereof will be further understood upon reference to the drawing, wherein:

Figure 1 is a schematic vertical section through dimple forming die;

Figure 2 is a perspective view of a typical dimpled sheet product made by our method;

Figure 3 is a block diagram illustrating the method of this invention and several variations thereof;

Figure 4 is a vertical section through a dimpled sheet product with face sheets in place;

Figure 5 is a vertical section through a tapered dimpled sheet;

Figure 6 is a vertical section through a dimpled sheet having areas of different dimple depth;

Figure 7 is a vertical section through a dimpled sheet having an ogive section; and

Figure 8 is a vertical section through a dimpled sheet having face sheets and an internal foam coating.

## DETAILED DESCRIPTION OF PREFERRED EMBODIMENTS

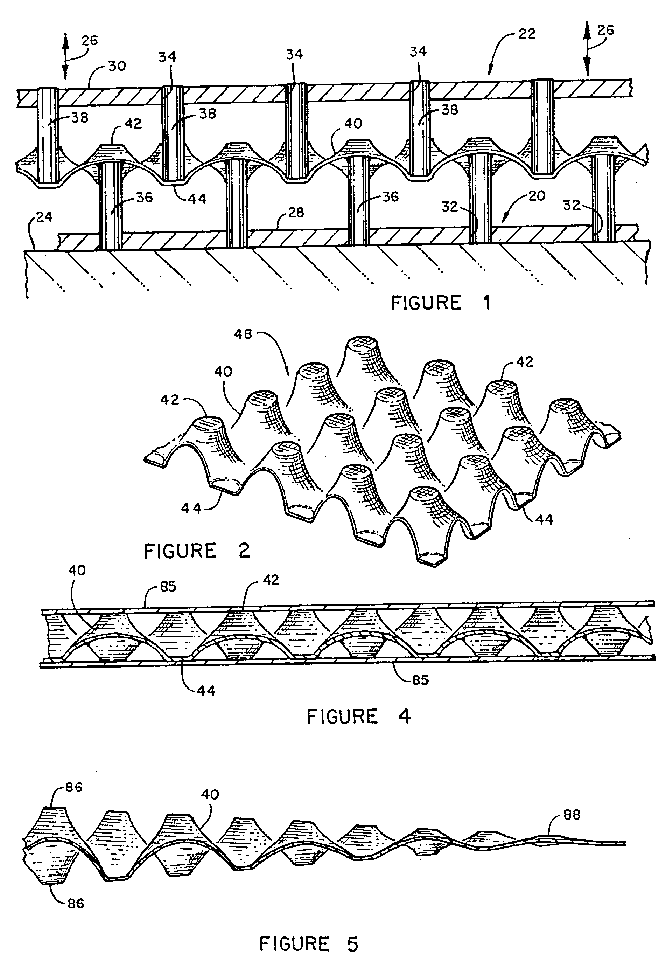

Referring now to Figure 1 there is seen a first die 10 and a second cooperating die 22. Die 20 rests on a support 24 which may be the fixed platen of a conventional press. Die 22 is movable toward and away from die 20 as schematically indicated by arrows 26. Typically, die 22 could be secured to the movable platen of a conventional press.

Dies 20 and 22 each basically comprises a plate 28 and 30, respectively, having a plurality of spaced holes 32 and 34 each receiving a finger 36 and 38, respectively. Each of fingers is coated with or has a surface layer of a mold release agent, or is formed from a material which will not stick to conventional resin precursors. For best results, fingers 38 and 38 are either formed from or have a surface layer of a solid fluorocarbon resin or the sort available from E.I. duPont de Nemours under the Teflon trademark.

Fingers 36 and 38 are arranged in a cooperating arrangement in which each of fingers 38 fits between fingers 36 as die 22 is moved toward 20. In most cases, it is preferred that the fingers on each die be uniformly spaced, with each finger 38 being uniformly spaced from surrounding fingers 36 as the dies are brought together. In special circumstances, these uniform spacings can be varied, such as when it is desired to omit both fingers 36 and 38 in a selected area so that no dimples are formed in that area. Fingers 36 and 38 may have any suitable diameter and configuration. Generally approximately round or hexagonal finger ends are preferred. Finger spacing and finger diameter are selected to give the desired dimple pattern for each application.

In operation, die 22 is moved away from die 20 to permit a sheet of knit material 40 to be inserted between the dies. Then die 22 is lowered until fingers 38 penetrate between fingers 36 to the position shown in Figure 1. Greater or lesser penetration will modify the height of the dimples formed.

Sheet 40 may be made from any suitable fibers having the desired strength characteristics. Typical fibers include glass, graphite and aramid fibers and mixtures thereof. The sheet is woven in a knit, double knit or similar manner which permits the sheet to stretch in all directions.

Sheet 40 is impregnated with a suitable liquid resin as detailed above. Preferably, the resin is in a prepreg or partially cured condition so that it can be easily handled.

Once desired penetration of fingers 38 between fingers 36 is achieved, the sheet is heated to cure the resin to a shape retaining state. If desired, the resin may be fully cured in the die assembly. However, in many cases to increase production, the dimpled sheet is removed in the intermediate, shape retaining, stage and later heated to effect full cure. Any conventional heating technique may be used, either in heating the die assembly or in post forming cure of the resin. Heating in a thermal oven and microwave heating have been found to be especially effective and are, therefore, preferred.

A typical finished dimpled sheet 48 is shown in perspective view in Figure 2. In this case, a uniform pattern of upwardly extending dimples 42 and downwardly extending dimples 44 are formed across dimpled sheet 48. While a variety of specialized patterns may be produced for particular applications as detailed below, the configuration of Figure 2 has most widespread use.

Details of the method of this invention, and several processing variations, are provided in the block diagram of Figure 3.

A suitable fabric sheet is selected as shown in block 50. Any suitable high strength fibers may be used. Typical fibers include glass, graphite, aramids and mixtures thereof. Glass fibers are often preferred for low cost, ease of use and the availability of knit or double-knit fabrics. Ordinary woven fiber sheets do not have the elasticity necessary for the dimple stretching operation. The fibers are largely inelastic and the wave does not allow the three-dimensional dimple stretch operation without breaking fibers and distorting the fabric. Knit materials have been found to be very effective in this method.

The sheet is then impregnated with a suitable synthetic resin, as indicated in block 52. Any suitable resin may be used to impregnate the sheets. While thermoplastics are useful in some cases, thermosetting resins are preferred because of their ease of curing in this process and the availability of thermosetting resins having very desirable high temperature characteristics. Typical thermosetting resins include polyimides, epoxies, phenolics, and mixtures thereof. Optimum results are obtained with polyimides due to their excellent strength and high temperature resistance, so that they are preferred. We have had excellent results with duPont PYRE-ML type RC5061 and Monsanto SKYBOND type 7271.

The preferred thermosetting resins may be cured in any suitable manner. Often it is desirable to impregnate the sheet with a resin precursor, which is cured to the "B" stage for ease of handling.

Next, the impregnated sheet 40 is placed between dies 36 and 38 as indicated by block 54 and the dies are brought together to the extent necessary to form dimples 42 and 44 of the height and shapes desired as indicated in block 56. As discussed above, fingers 36 and 38 may have any desired shapes and spacing.

The sheet as shaped in the die to produce the selected dimple pattern is cured to a shape retaining stage as indicated in block 58. Final curing may take place in the die if desired. Alternately, the sheet may be removed and then fully cured. Typically, the resin may be cured in a thermal or microwave oven.

The dimpled sheet 48 may then be further processed in a variety of different ways, as indicated by the different paths shown in Figure 3.

In one preferred embodiment, to manufacture structural panels equivalent to honeycomb panels, the dimpled sheet 48 may be fully cured in the die assembly as indicated in block 60, then removed and have face sheets bonded to one or both sides as indicated in block 60. Any suitable face sheets may be used. Typically, fiber reinforced, resin impregnated flat sheets of the sort used to make dimpled sheet 48 could be used, although less expensive woven or matt fiber materials may be preferred over the more expensive knit material used in sheet 48. Any other suitable metal, composite or other sheet material could be used for the face sheets. The face sheets may be bonded to dimpled sheet 48 by any suitable method, such as adhesive bonding.

In another post forming application, the partially cured dimpled sheets produced in block 58 could be removed as indicated in block 64, have face sheets applied as indicated in 66 (which could be composite sheets using the same or similar impregnating resin as used in dimpled sheets 48) and fully cured to a well bonded assembly. Preferably, the assembly would be placed between platens applying light but uniform pressure during cure.

In a somewhat similar process, the partially cured dimpled sheets 48 could be removed from the die assembly as indicated in block 70, the sheet could be reshaped in one dimension (e.g., rolled or bent along one line) as indicated in block 72 flexible face sheets could be applied as indicated in block 74 and the assembly cured as indicated in block 76. Of course, the dimpled sheet 48 could be reshaped and fully cured before the application of the face sheets. We have found that this dimpled sheet material is substantially free from the anti-clastic phenomenon which prevents many other thick core material from bending smoothly. For example, honeycomb materials when rolled into a tubular shape tend to curve into a saddle shape.

In a somewhat different post treatment, the partially cured (or fully cured, if desired) dimpled sheet 48 could be removed from the die assembly as indicated in block 80, a foamable precursor could be applied to the sheet (block 82), face sheets 85 emplaced on the dimpled sheet as indicated by block 84 and the assembly heated to cause foaming and bonding as shown by block 86.

In many cases the addition of foam layers or fillings desirably increases the rigidity and insulation qualities of the final product. Where the partially cured dimpled sheet is tacky, or with the application of a thin adhesive coating, the sheet could be dipped in powdered foam precursor to form a thin layer, which would foam and expand during curing. Or, a dry dimpled sheet could be dipped in a liquid foam precursor and heated with or without face sheets to form a foam layer. Generally, the foam coating will be sufficient to bond the face sheets in place without additional adhesive, although an adhesive may be used if desired. In another variation, sufficient foam precursor may be placed in dimples so that the entire volume within face sheets is filled with foam. Heating to cure may be accomplished in any suitable manner, such as heating in a thermal oven or microwave heating.

Any suitable foam precursor may be used, which may be foamed under any suitable conditions. We prefer polyimide based foamable materials because of the high strength and high temperature and flame resistance of the finished foam. Such materials are disclosed, for example, by Lanvin in U.S. Patent 3,554,939 and Gagliani in patent no. 4,305,796.

Often it is desirable to produce a structural panel having face sheets as is shown in section in Figure 4. Face sheets 85 may be secured to upper and lower dimples 42 and 44 by any suitable means, such as an adhesive. The dimpled sheet may be flat (as shown) or curved to produce a flat or curved structural panel. Where the face sheets and dimpled sheets are formed from polyimide impregnated fiber material, it is generally preferred that a polyimide adhesive be used to maintain the flame and high temperature resistance of the assembly.

As mentioned above, a dimpled sheet of tapered thickness may be formed by closing the die set more at one end or tilting the upper die 30 then lowering it at that tilt toward die 28. A vertical section view through the resulting dimpled sheet is provided in Figure 5. Here sheet 40 has deep dimples 86 at one end and shallow dimples 88 at the other.

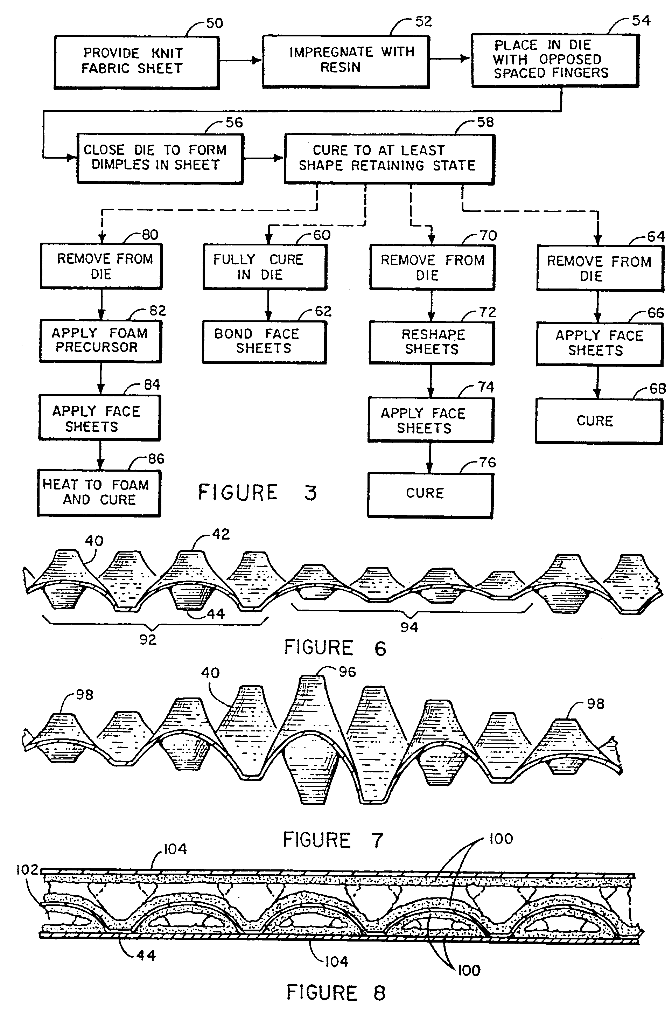

In another embodiment, the lengths of fingers 36 and 38 may be varied to produce dimpled sheets having a variety of configurations. For example, as seen in Figure 6 fingers of uniform greater lengths may be used to form deeper dimples 92 in selected areas and uniform shorter lengths to foam shallow dimples 94 in other areas to correspond to a shaped face sheet, to provide decorative effects or areas such as along edges for attachment to other structures. As seen in Figure 7, an ogive cross section sheet can be made by varying finger length uniformly, producing deeper dimples 96 near the center and gradually shorter dimples 98 near the edges.

Foam may be added to the dimpled sheet either as a layer or a filling as detailed below. In one preferred arrangement as seen in Figure 8, foam forms a layer 100 on dimpled sheet 102 and also serves to bond face sheets 104 to the structure.

While certain preferred configurations, arrangements and combinations are detailed in the above description of preferred embodiments, those can be varied, where suitable, with similar results. Other variations, applications and ramifications of the present invention will occur to those skilled in the art upon reading the present disclosure. Those are intended to be included within the scope of the invention, as defined in the appended claims.

## Claims

1. The method of preparing high strength dimpled sheet structures which comprises the steps of:

   providing a pair of die members having opposed faces bearing a plurality of upstanding fingers arranged in a relatively spaced pattern;

   placing a resin impregnated preform sheet of woven high strength fiber cloth between the opposed finger patterns;

   said cloth being stretchable in all directions in the plane of the cloth;

   moving said die members together until said fingers press into said preform sheet forming a pattern of oppositely extending spaced dimples;

   curing said resin to at least a shape retaining state; and

   removing the resulting dimpled sheet from between said die members.

2. The method of making dimpled sheet structure according to claim 1 wherein said fibers are substantially inelastic and said cloth is a knit weave.

3. The method of making dimpled sheet structure according to claim 2 wherein said fibers are selected from the group consisting of glass, graphite, aramid and mixtures thereof.

4. The method of making dimpled sheet structure according to claim 3 wherein said fibers are glass fibers.

5. The method of making dimpled sheet structures according to claim 1 wherein said resin comprises a thermosetting resin precursor.

6. The method of making dimpled sheet structures according to claim 5 wherein said resin comprises a polyimide precursor.

7. The method of making dimpled sheet structures according to claim 1 wherein said resin precursor is fully cured while between said die members.

8. The method of making dimpled sheet structures according to claim 1 wherein said resin precursor is cured to a shape retaining state while between said die members, then removed and fully cured in a heated air atmosphere or with microwave energy.

9. The method of making dimpled sheet structures according to claim 1 including the further step of applying a foamable material to the dimpled sheet and causing that material to foam.

10. The method of making dimpled sheet structures according to claim 9 wherein said foamable material is a liquid or dry thermally foamable polyimide precursor.

11. The method of making dimpled sheet structures according to claim 9 wherein said foamable material is applied by dipping said dimpled sheet in a liquid foam precursor.

12. The method of making dimpled sheet structures according to claim 9 wherein foamable material is applied by coating said dimpled sheet with an adhesive layer of resin precursor and dipping said dimpled sheet in a powdered foam precursor.

13. The method of making dimpled sheet structures according to claim 9 including the further step of pressing face sheets against the opposite sides of said dimpled sheet prior to thermally foaming said foamable material, whereby said foam precursor foams and bonds said face sheets to said dimpled sheet during foaming.

14. The method of making dimpled sheet structures according to claim 1 including the furthers step of bonding at least one face sheet to at least one surface of said dimpled sheet.

15. The method of making dimpled sheet structures according to claim 14 including the further step of reshaping said dimpled sheet in one direction prior to bonding said at least one face sheet thereto.

16. The method of making dimpled sheet structures according to claim 1 wherein said fingers have substantially equal lengths and said dies are maintained in a substantially parallel relationship so that said fingers are pressed into said preform sheet a substantially equal distance.

17. The method of making dimpled sheet structures according to claim 16 wherein said dies are relatively angled so that fingers progressively press into said preform sheet an increased distance from one edge to the opposite edge.

18. The method of making dimpled sheet structures according to claim 1 wherein said fingers have different lengths in selected areas so that as said dies are brought together dimples of different depths are formed in those areas.

19. The method of making dimpled sheet structures according to claim 1 wherein said surfaces of said fingers which contact said preform sheet are formed from a solid fluorocarbon material.

20. Apparatus for making high strength dimpled sheet structures which comprises:
   a first die having a first plurality of upstanding spaced fingers;
   a second die spaced from said first die and having a second plurality of upstanding spaced fingers extending toward said first fingers;
   said second fingers spaced substantially uniformly between said first fingers;
   means for moving said first and second dies toward each other whereby dimples are formed in any sheet positioned between said first and second fingers.

21. The apparatus according to claim 20 wherein said fingers have a flurocarbon surface adapted to contact a sheet pressed between said fingers.

22. The apparatus according to claim 20 wherein said fingers have substantially equal lengths whereby uniform dimples are produced.

23. The apparatus according to claim 20 wherein said fingers have different lengths in different regions whereby dimples of different heights are produced in selected areas.

24. A high strength dimpled sheet structure which comprises a resin impregnated sheet of knit fiber material having a plurality of spaced dimples extending beyond the plane of said sheet alternately in opposite directions, said resin being sufficiently cured to retain the dimpled sheet configuration.

25. The dimpled sheet structure according to claim 24 wherein said fibers are selected from the group consisting of glass, graphite, aramid and mixtures thereof.

26. The dimpled sheet structure according to claim 24 wherein said fibers are glass fibers.

27. The dimpled sheet structure according to claim 24 wherein said resin comprises a thermosetting resin precursor.

28. The dimpled sheet structure according to claim 27 wherein said resin comprises a polyimide.

29. The dimpled sheet structure according to claim 24 further including at least one face sheet bonded to at least one face of said dimpled sheet.

30. The dimpled sheet structure according to claim 24 further including a layer of foam material bonded to said dimpled sheet.

31. The dimpled sheet structure according to claim 24 further including face sheets bonded to both faces of said sheet and a quantity of foam substantially filling the spaces between said dimpled sheet and said face sheets.

32. The dimpled sheet structure according to claim 24 wherein said dimples have varying heights in selected areas.

FIGURE 1

FIGURE 2

FIGURE 4

FIGURE 5

FIGURE 3

FIGURE 6

FIGURE 7

FIGURE 8